# EUROPÄISCHE PATENTANMELDUNG

(11) **EP 4 641 160 A1**
(43) Veröffentlichungstag der Anmeldung: **29.10.2025**
(21) Anmeldenummer: 24172443.4
(22) Anmeldetag: 25.04.2024
(51) Int. Cl.: G01M 11/06

(54) **VORRICHTUNG ZUM HÖHENVERSTELLEN EINES SCHEINWERFER-EINSTELL-PRÜFGERÄTS**

(71) Anmelder: Hella Gutmann Solutions GmbH, 79241 Ihringen (DE)
(72) Erfinder: DRIEWER, Adrian, 79241 Ihringen (DE); TURNSCHEK, Stefan, 79241 Ihringen (DE)
(74) Vertreter: Pfenning, Meinig & Partner mbB

(57) **Zusammenfassung**

Die vorliegende Erfindung betrifft eine Vorrichtung, ein Verfahren, sowie ein Computerprogramm zum Höhenverstellen eines Scheinwerfer-Einstell-Prüfgeräts (SEP).

## Beschreibung

Die vorliegende Erfindung betrifft eine Vorrichtung, ein Verfahren, sowie ein Computerprogramm zum Höhenverstellen eines Scheinwerfer-Einstell-Prüfgeräts (SEP).

Für das Einstellen und Vermessen von Scheinwerfern eines Fahrzeugs wird häufig ein Scheinwerfer-Einstell-Prüfgerät verwendet, mit dem die Einstellung eines Scheinwerfers überprüft werden kann und mit dessen Hilfe der Scheinwerfer korrekt eingestellt werden kann. Hierzu wird ein SEP vor dem Scheinwerfer des Fahrzeugs positioniert, um die Lichtverteilung des Scheinwerfers zu vermessen. Dabei ist es erwünscht, dass das SEP auf einer bestimmten Höhe in Bezug auf den Scheinwerfer, beispielsweise dergleichen Höhe wie der Scheinwerfer des Fahrzeugs angeordnet ist. Im Allgemeinen unterscheiden sich die Höhen, in denen die Scheinwerfer eines Fahrzeugs angeordnet sind, von Fahrzeughersteller zu Fahrzeughersteller und von Fahrzeugtyp zu Fahrzeugtyp. Darüber hinaus weist ein Fahrzeug meist mehrere Scheinwerfertypen auf, die ihrerseits jeweils auf unterschiedlichen Höhen angeordnet sind. Beispielsweise können die Fernlichtscheinwerfer eines Fahrzeugs höher angeordnet sein als die Abblendlichtscheinwerfer oder die Nebelscheinwerfer des gleichen Fahrzeugs. Es ist daher häufig nötig, die Höhe des SEP zu verstellen und an den zu vermessenden Scheinwerfer anzupassen.

Die Höhe des SEP wird in der Regel durch den Anwender auf Grundlage von optischen Kriterien manuell eingestellt. Hierzu sind in manchen SEPs Hilfsmittel vorgesehen, wie beispielsweise an der Gehäusefront eingeprägte Skalen oder auf den Scheinwerfer gerichtete Kreuzlaser.

Das Einstellen der Höhe des SEP kann dabei dennoch in manchen Fällen mit Schwierigkeiten für den Anwender verbunden sein oder nur ungenau erfolgen.

Die vorliegende Erfindung wurde konzipiert, um die vorstehend genannten Probleme zumindest teilweise zu lösen, und soll eine einfache Höhenverstellung und Höheneinstellung eines SEP ermöglichen und eine für die Einstellung des Scheinwerfers mittels SEP nötige Genauigkeit der Höheneinstellung gewährleisten.

Zur Lösung des Problems werden eine Vorrichtung, ein Verfahren sowie ein Computerprogramm zum Höhenverstellen eines SEP gemäß den unabhängigen Ansprüchen vorgeschlagen.

Gemäß einem ersten Aspekt der Erfindung wird eine Vorrichtung zum Höhenverstellen eines Scheinwerfer-Einstell-Prüfgeräts (SEP) vorgeschlagen.

Die Vorrichtung weist dazu einen Aktuator zum Bewegen des SEP in vertikaler Richtung auf. Unter einem Aktuator kann im Rahmen der vorliegenden Offenbarung eine Vorrichtung angesehen werden, die das SEP zumindest in vertikaler Richtung in Bewegung versetzen kann.

Insbesondere kann unter einem Aktuator eine Vorrichtung verstanden werden, die eine Bewegung des SEP um eine vorbestimmte Strecke bewirken kann. Als ein Aktuator kann ebenfalls eine Vorrichtung angesehen werden, die eine Bewegung derart bewirken kann, dass das bewegte Element an einer vorbestimmten Position angeordnet wird. Der Aktuator kann beispielsweise einen elektrisch betriebenen Motor aufweisen. Der Aktuator kann beispielsweise ein Linearaktuator sein. Der Aktuator kann beispielsweise einen Bewegungsumfang von mehr als 50 cm aufweisen, insbesondere mehr als 100 cm oder mehr als 120 cm und/oder beispielsweise weniger als 200 cm, insbesondere weniger als 150 cm. Der Aktuator kann in manchen Ausführungsformen eine Spindel aufweisen, die um einen vorbestimmten Drehwinkel gedreht wird, wobei das SEP an einer zugehörigen Spindelmutter befestigbar ist. Dabei kann durch die Drehung der Spindel eine Linearbewegung des SEP realisiert werden. Der Aktuator kann in einigen Ausführungsformen ein Zahnrad und eine Zahnstange aufweisen. Der Aktuator kann in manchen Ausführungsformen auch eine bewegbare Kette oder ein bewegbares Band aufweisen, an der oder dem das SEP befestigt ist.

Weiter weist die Vorrichtung zum Höhenverstellen eines SEP einen Prozessor auf, der mit dem Aktuator wirksam verbunden ist. Das bedeutet üblicherweise, dass der Prozessor dem Aktuator Befehle senden kann, insbesondere Steuerbefehle, die den Aktuator dazu veranlassen eine Bewegung durchzuführen und ein Element, insbesondere das SEP oder ein mit dem SEP wirksam verbundenes Element, zu bewegen. Der Prozessor weist dazu oftmals eine Schnittstelle auf, die es ermöglicht Steuerbefehle an den Aktuator zu senden. Der Aktuator weist seinerseits eine Schnittstelle aufweisen, die es ermöglicht Steuerbefehle zu empfangen.

Der Steuerbefehl kann eine vorbestimmte Wegstrecke, insbesondere die Länge einer Wegstrecke, enthalten, sodass der Aktuator bei Ausführen des Steuerbefehls dazu veranlasst wird, eine Bewegung des SEP um diese Wegstrecke zu bewirken. Das bedeutet beispielsweise, dass sich der Aktuator oder das Element, das vom Aktuator bewegt wird, vor dem Ausführen des Steuerbefehls in einer ersten Position befindet und sich nach Ausführen des Steuerbefehls in einer zweiten Position befindet. Der Steuerbefehl ist dann so ausgestaltet, dass der räumliche Abstand, insbesondere der Abstand in vertikaler Richtung, zwischen erster Position und zweiter Position gleich der Länge der Wegstrecke ist. Alternativ oder ergänzend kann der Steuerbefehl eine vorbestimmte Position enthalten, sodass das SEP nach der Ausführung des Steuerbefehls in jener vorbestimmten Position angeordnet ist.

Der Prozessor ist dazu eingerichtet, eine Sollhöhe des SEP von einem Speicher oder einer externen Datenquelle zu erhalten. Der Prozessor kann dazu eine geeignete Schnittstelle aufweisen, die es ermöglicht, Daten von dem Speicher oder der externen Datenquelle zu erhalten. Die Sollhöhe, kann im Rahmen der vorliegenden Offenbarung eine Höhe eines Bezugspunkts des SEP über einer Bodenebene oder Bodenhöhe sein. Das SEP kann beispielsweise ein optisches Element aufweisen und der Bezugspunkt kann beispielsweise in einer optischen Achse des SEP liegen. Die optische Achse des SEP kann die optische Achse des optischen Elements des SEP, insbesondere die optische Achse eines objektseitigen optischen Elements des SEP sein oder enthalten. Das optische Element kann beispielsweise eine optische Linse sein. Die Sollhöhe kann also insbesondere die vertikale, minimale Distanz zwischen der optischen Achse des SEP und einer Bodenebene, sein. Die Bodenebene kann beispielsweise durch den Boden einer Werkstatt gebildet sein oder den Boden einer Werkstatt zumindest teilweise enthalten. Die Sollhöhe kann insbesondere auf Grundlage der Höhe des zu vermessenden Scheinwerfers über der Bodenebene bestimmt werden. In den meisten Ausführungsformen ist die Sollhöhe eine Höhe des SEP, in der die optische Achse des SEP das Zentrum des zu vermessenden Scheinwerfers.

Unter einem Speicher kann im vorliegenden Fall ein Datenspeicher verstanden werden. Im Allgemeinen kann der Speicher eine Vorrichtung zum Speichern von Daten sein. Die Daten können im Speicher beispielsweise in Form einer Datenbank vorliegen. Die Daten können beispielsweise in verknüpfter Form oder in Form von Paaren vorliegen. Beispielsweise können Daten, die einen Fahrzeugtyp betreffen, mit Daten, die eine Sollhöhe betreffen, verknüpft sein oder als ein Paar oder in Tabellenform vorliegen. Die Fahrzeugtypen und/oder Sollhöhen können im Allgemeinen auch ohne eine Verknüpfung vorliegen. Der Speicher kann zumindest über eine Ausleseschnittstelle verfügen. Die Ausleseschnittstelle kann dazu eingerichtet sein, Daten vom Speicher an eine andere Vorrichtung zu senden oder zum Auslesen zur Verfügung zu stellen. Der Speicher ist in den meisten Ausführungsformen in die Vorrichtung integriert und bildet einen Teil der Vorrichtung zum Höhenverstellen des SEP.

Unter einer externen Datenquelle kann im vorliegenden Fall ein Datenspeicher verstanden werden, der im Wesentlichen die gleichen Eigenschaften wie der Speicher aufweist, aber getrennt vom Prozessor angeordnet ist. Die externe Datenquelle kann beispielsweise ein Cloud-Speicher oder auch ein Datenträger sein. Als externe Datenquelle kann beispielsweise auch das Fahrzeug selbst dienen, das beispielsweise Daten an den Prozessor sendet. Auch andere Endgeräte, wie Smartphones oder Tablet-PCs, oder Server, die drahtgebunden oder drahtlos zum Verschicken der Daten mit dem Prozessor verbunden sind, kommen als externe Datenquelle in Frage. Wenn nachstehend nur von Speicher die Rede ist, können damit der Speicher und/oder die externe Datenquelle gemeint sein.

Weiter ist der Prozessor dazu eingerichtet einen ersten Steuerbefehl zum Steuern des Aktuators auf Grundlage der erhaltenen Sollhöhe zu erzeugen. Der Prozessor kann dabei beispielsweise dazu eingerichtet sein, die Sollhöhe, die beispielsweise in Einheiten von Metern vorliegt, in einen Steuerbefehl mit den oben beschriebenen Merkmalen umwandeln. Dabei kann der Prozessor in manchen Ausführungsformen auch weitere Daten verwenden, die in einem Speicher oder einer externen Datenquelle hinterlegt sind. Weitere Daten können beispielsweise eine Referenzhöhe oder Umrechnungstabellen oder Umrechnungsformeln zum Berechnen verschiedener Einheiten umfassen.

In einigen Ausführungsformen kann der Prozessor dazu eingerichtet sein, Fahrzeug- und/oder Scheinwerferdaten zu erhalten, und auf Grundlage der Fahrzeug- und/oder Scheinwerferdaten die Sollhöhe des SEP zu erhalten oder zu bestimmen. Dies kann insbesondere bedeuten, dass der Prozessor beispielsweise einen Fahrzeugtyp erhält und auf Grundlage des Fahrzugstyps eine Sollhöhe aus dem Speicher bestimmt. Dazu kann der Prozessor beispielsweise auf eine im Speicher hinterlegte Tabelle zurückgreifen, in der ein Fahrzeugtyp und/oder ein Scheinwerfertyp mit einer entsprechenden Sollhöhe verknüpft sind/ist.

Alternativ oder ergänzend kann die Vorrichtung weiter eine Eingabeeinheit zum Eingeben von Fahrzeug- und/oder Scheinwerferdaten aufweisen, wobei der Prozessor dazu eingerichtet ist, den ersten Steuerbefehl auf Grundlage der eingegebenen Fahrzeug- und/oder Scheinwerferdaten zu erzeugen. Die eingegebenen Fahrzeug- und/oder Scheinwerferdaten können dabei insbesondere einen Fahrzeug- und/oder Scheinwerfertyp umfassen, wobei der Prozessor die Sollhöhe auf Grundlage des eingegebenen Fahrzeug- und/oder Scheinwerfertyps erhält oder aus dem Speicher ausliest, und auf dieser Grundlage einen Steuerbefehl erzeugt. Die eingegebenen Daten können beispielsweise eine manuell eingegeben Sollhöhe umfassen, die im Speicher gespeichert wird und anschließend zur Erzeugung des Steuerbefehls genutzt wird.

Es sind ebenfalls Ausführungsformen möglich, in denen die Vorrichtung, einen Anschlag aufweist, der einen durch den Aktuator realisierbaren Verschiebeweg des SEP in vertikaler Richtung begrenzt. Der Verschiebeweg kann dabei mechanisch begrenzt sein, beispielsweise in dem eine weitere Bewegung mechanisch blockiert wird. Der Verschiebeweg kann alternativ oder ergänzend elektronisch begrenzt sein, sodass beispielsweise die Bewegung des Aktuators gestoppt wird, wenn eine bestimmte Position des SEP erfasst wird. Dies kann beispielsweise durch eine Lichtschranke realisiert werden. In den meisten Ausführungsformen ist die Höhe des Anschlags festgelegt und/oder bekannt. In manchen Ausführungsformen ist insbesondere die Höhe des SEP oder einer optischen Achse des SEP, wenn das SEP an den Anschlag anschlägt bzw. elektronisch blockiert wird, bekannt. Dies kann beispielsweise für eine Kalibration des Systems genutzt werden.

Der Prozessor kann in diesen Ausführungsformen beispielsweise dazu eingerichtet sein, einen Steuerbefehl zu erzeugen, mit dem das SEP gegen den Anschlag bewegt wird. Der Steuerbefehl kann beispielsweise lediglich das Bewegen des SEP in Richtung des Anschlags umfassen, ohne dabei eine bestimmte Wegstrecke oder -länge aufzuweisen. Der Steuerbefehl kann beispielsweise auch umfassen, das SEP um eine bestimmte Strecke in Richtung des Anschlags zu bewegen, wobei die dazu vorbestimmte Strecke derart bemessen ist, dass sichergestellt ist, dass das SEP gegen den Anschlag bewegt wird.

Unabhängig davon kann die Position oder Stellung des Aktuators, bei der das SEP am Anschlag anschlägt, als eine Referenzposition des Aktuators definiert werden. Alternativ oder ergänzend kann die Position des SEP, wenn es am Anschlag anschlägt, als eine Referenzposition des SEP definiert werden. Eine Referenzposition des Aktuators kann beispielsweise die Stellung des Aktuators zum Zeitpunkt des Anschlagens oder beim Beenden weiterer Aktuatorbewegung nach dem Anschlagen sein. Die Referenzposition des SEP kann beispielsweise der Abstand des SEP zu einer Bodenebene zum Zeitpunkt des Anschlagens sein.

In einigen Ausführungsformen ist der Prozessor dazu eingerichtet, den ersten Steuerbefehl auf Grundlage der Referenzposition des Aktuators und/oder der Referenzposition des SEP zu erzeugen.

In einigen Ausführungsformen weist die Vorrichtung eine vertikale Führung auf, die dazu eingerichtet ist, das SEP in vertikaler Richtung zu führen. Dadurch kann die vertikale Positionierung des SEP vereinfacht werden. Die Führung kann beispielsweise durch Schienen gebildet werden. Es sind auch ausführungsformen möglich, in denen der Aktuator selbst eine Führung aufweist oder die Führung für ein SEP bildet.

Alternativ oder ergänzend kann in manchen Ausführungsformen der Vorrichtung eine Entlastungsvorrichtung vorgesehen sein, die ausgebildet ist, den Aktuator von einem Teil der Gewichtskraft des SEP zu entlasten. Dabei kann die Entlastungsvorrichtung den Aktuator von mehr als 50 %, oder beispielsweise mehr als 80 % oder insbesondere mehr als 90 % der Gewichtskraft des SEP entlasten. Die Entlastungsvorrichtung kann in manchen dieser Ausführungsformen ein Gegengewicht und einen Übertragungsmechanismus aufweisen.

Durch die Entlastung des Aktuators werden beispielsweise die Anforderungen an die Hubkraft des Aktuators verringert.

In manchen Ausführungsformen kann die Vorrichtung alternativ oder ergänzend ein Positionsbestimmungsmittel zum Bestimmen einer vertikalen Position des SEP und/oder einer Position des Aktuators aufweisen. Als Position ist dabei insbesondere die Höhe des SEP über einer Bodenebene zu verstehen. Das Positionsbestimmungsmittel kann die Position beispielsweise unter Verwendung von Schallwellen, insbesondere Ultraschallwellen oder elektromagnetischen Wellen, insbesondere Licht oder Radiowellen, bestimmen. In diesen Ausführungsformen kann der Prozessor dazu eingerichtet sein, den ersten Steuerbefehl auf Grundlage der aktuellen vertikalen Position des SEP und/oder der Position des Aktuators und der Sollhöhe des SEP zu erzeugen. Der Steuerbefehl kann beispielsweise auch derart erzeugt werden, dass das SEP durch den Aktuator lediglich so lange in eine Richtung bewegt wird, bis mit dem Positionsbestimmungsmittel bestimmt wird, dass das SEP die Sollhöhe erreicht hat.

Gemäß einem weiteren Aspekt der vorliegenden Erfindung wird ein Verfahren zur automatischen Höheneinstellung eines Scheinwerfer-Einstell-Prüfgeräts vorgeschlagen. Das Verfahren weist die folgenden Schritte auf:
- Erhalten einer Sollhöhe von einem Speicher oder einer externen Datenbank;
- Erzeugen eines ersten Steuerbefehls auf Grundlage der erhaltenen Sollhöhe zum Bewegen des SEP in vertikaler Richtung mit einem Aktuator.

In einigen Ausführungsformen weist das Verfahren weiter die folgenden Schritte auf:
- Erhalten von Fahrzeug- und/oder Scheinwerferdaten;
- Erhalten einer Sollhöhe auf Grundlage des erhaltenen Fahrzeug- und/oder Scheinwerfertyps von dem Speicher oder der externen Datenquelle.

In einigen Ausführungsformen des Verfahrens wird der erste Steuerbefehl auf Grundlage der Sollhöhe und einer Referenzposition erzeugt.

Alternativ oder ergänzend weist das Verfahren in manchen Ausführungsformen weiter die folgenden Schritte auf:
- Erzeugen eines zweiten Steuerbefehls, um das SEP in vertikaler Richtung derart zu bewegen, dass das SEP und/oder der Aktuator in der Referenzposition angeordnet ist;
- Bewegen des SEP durch Ausführen des zweiten Steuerbefehls;
- Stoppen der Bewegung des SEP an der Referenzposition;
- Festlegen der aktuellen Position als Referenzposition.

Dabei kann das Stoppen der Bewegung durch einen Anschlag, der den Verschiebeweg des SEP begrenzt, erfolgen.

Der erste Steuerbefehl und/oder der zweite Steuerbefehl werden vorzugsweise drahtgebunden oder drahtlos an den Aktuator geschickt, der daraufhin die im Steuerbefehl enthaltene Aktion durchführt.

Gemäß einem weiteren Aspekt der Erfindung wird ein Computerprogramm vorgeschlagen, wobei das Computerprogramm Anweisungen enthält, die einen Steuerungscomputer dazu veranlassen, das zuvor beschriebene Verfahren auszuführen. Der Steuercomputer kann beispielsweise durch einen Speicher und einen Prozessor realisiert sein, wobei der Prozessor mit einem Aktuator wirksam verbindbar ist.

Weiter kann insbesondere ein System zum Vermessen von Fahrzeugscheinwerfern vorgesehen sein, wobei das System ein SEP und die Vorrichtung in einer beliebigen der vorstehend beschriebenen Ausführungsformen oder einer beliebigen Kombination der vorangehend beschriebenen Ausführungsformen aufweist. Das SEP kann ein Gehäuse mit einer Abbildungsoptik und einem Schirm aufweisen. Die Abbildungsoptik kann beispielsweise eine Fresnellinse aufweisen oder daraus bestehen. Der Schirm kann in manchen Ausführungsformen des SEPs in der Brennebene der Abbildungsoptik angeordnet sein. Das SEP kann dabei derart angeordnet sein, dass die optische Achse horizontal verläuft. Das SEP ist derart mit dem Aktuator verbunden, dass es durch den Aktuator in vertikaler Richtung bewegbar ist.

Merkmale, die im Zusammenhang mit verschiedenen Ausführungsformen der Vorrichtung, des Verfahrens, des Computerprogramms und/oder des Systems genannt wurden, können miteinander kombiniert werden. Die genannten Ausführungsformen können einander also ergänzen oder auch als Alternativen zueinander angesehen werden. Weiter kann, wenn von Verfahrensmerkmalen die Rede ist, ein oder mehrere Prozessoren vorgesehen sein, die dazu eingerichtet sind, die Verfahrensmerkmale einzeln oder gemeinsam durchzuführen und/oder dazu eingerichtet sind, andere Vorrichtungen dazu zu veranlassen die Verfahrensschritte durchzuführen.

Nachfolgend soll die Erfindung anhand von Figuren beispielhaft erläutert werden. Dabei weisen gleiche Bezugszeichen auf gleiche oder ähnliche Merkmale hin. Die Erfindung ist nicht auf die in den Figuren gezeigten Beispiele beschränkt. Merkmale, die in den einzelnen Figuren gezeigt sind, können miteinander kombiniert werden, sofern sie sich nicht gegenseitig ausschließen.

Es zeigt:
- Fig. 1: ein Scheinwerfer-Einstellprüfgerät (SEP);
- Fig. 2: ein SEP, das vor einem Fahrzeug mit Scheinwerfern positioniert ist;
- Fig. 3: eine schematische Darstellung einer ersten Ausführungsform einer Vorrichtung zum Höhenverstellen eines SEP;
- Fig. 4: eine schematische Darstellung einer zweiten Ausführungsform einer Vorrichtung zum Höhenverstellen eines SEP;
- Fig. 5: eine schematische Darstellung einer dritten Ausführungsform einer Vorrichtung zum Höhenverstellen eines SEP.
- Fig. 6: eine schematische Darstellung einer vierten Ausführungsform einer Vorrichtung zum Höhenverstellen eines SEP.
- Fig. 7: ein Blockdiagramm eines Verfahrens zur automatischen Höheneinstellung eines SEP.

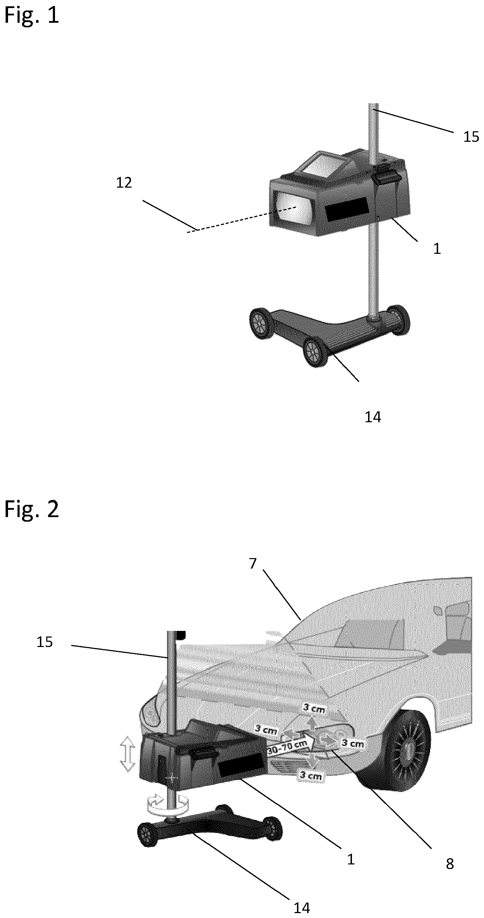

Figur 1 zeigt ein Scheinwerfer-Einstellprüfgerät (SEP) 1. Das SEP 1 weist typischerweise ein Gehäuse mit einer Abbildungsoptik und einem Schirm auf. Die Abbildungsoptik kann beispielsweise eine Fresnellinse umfassen oder daraus bestehen. Der Schirm kann in der Brennebene der Abbildungsoptik angeordnet sein. Die optischen Komponenten des SEP 1 ermöglichen die Vermessung von Licht eines Scheinwerfers 8 eines Fahrzeugs 7. Typischerweise dienen die optischen Komponenten des SEP dazu, das Licht, das von einem Scheinwerfer 8 eines Fahrzeugs 7 abgestrahlt wird, auf den Schirm abzubilden. Dem SEP 1 kann eine optische Achse 12 zugeordnet werden, die durch die optische Achse des objektseitigen optischen Elements bestimmt wird. Das SEP 1 ist typischerweise so ausgerichtet, dass die optische Achse 12 des SEP 1 horizontal verläuft.

Das SEP 1 ist in vertikaler Richtung bewegbar gelagert. Das in Figur 1 dargestellte SEP 1 ist dazu an einer vertikalen Führungsschiene 15 angeordnet. Das SEP 1 kann weiter in horizontaler Richtung verschiebbar sein. Dazu kann das SEP 1, wie in der dargestellten Ausführungsform gezeigt, auf entsprechenden Verschiebemitteln 14 gelagert sein. In der dargestellten Ausführungsform sind die Verschiebemittel 14 durch drei Rollen realisiert, die eine Verschiebung des SEP 1 in horizontaler Richtung ermöglichen.

Figur 2 zeigt das SEP 1 aus Figur 1, wenn es vor einem Fahrzeug 7 positioniert ist. Es ist von Vorteil, wenn das SEP 1 derart positioniert ist, dass die optische Achse 12 des SEP 1 den Scheinwerfer 8 direkt schneidet oder zumindest in einem Abstand von weniger als 5 cm, vorzugsweise weniger als 3 cm schneidet. Hierzu ist insbesondere eine verlässliche Höheneinstellung des SEP 1 nötig. Die Figuren 1 und 2 zeigen ein herkömmliches SEP 1 gemäß dem Stand der Technik.

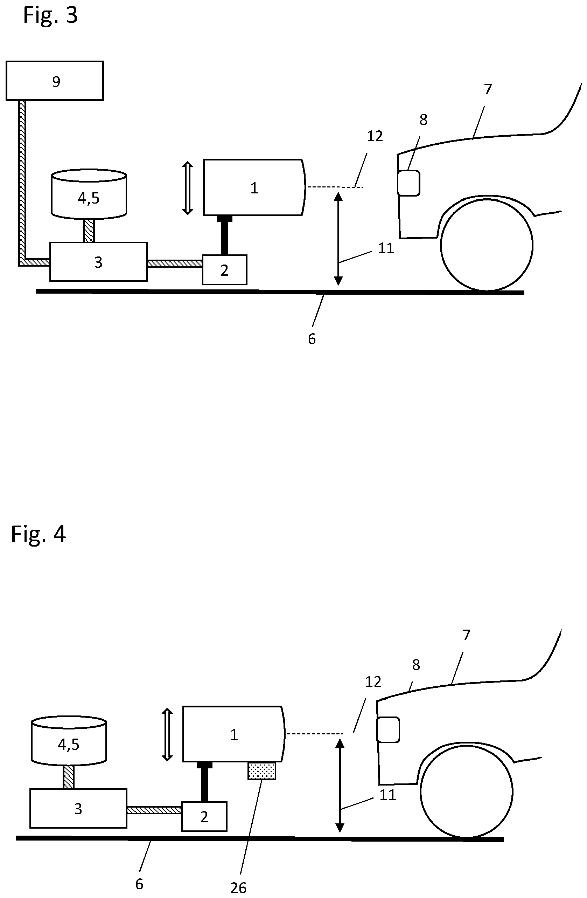

Figur 3 zeigt eine schematische Darstellung einer Vorrichtung zum Höhenverstellen eines SEP 1 mit einem Aktuator 2, einem Prozessor 3 und einem Speicher 4. Das SEP 1 ist dabei durch eine Wirkverbindung mit dem Aktuator 2 in vertikaler Richtung bewegbar. Das SEP 1 kann beispielsweise vom Aktuator 2 entlang einer vertikalen Führungsscheine 15, die in Figur 3 nicht darstellt ist, bewegbar sein bzw. bewegt werden. Der Aktuator 2 ist wirksam mit dem Prozessor 3 verbunden und dazu eingerichtet einen Steuerbefehl vom Prozessor 3 zu erhalten. Der Aktuator 2 führt eine Bewegung auf Grundlage dieses Steuerbefehls aus. Der Prozessor 3 ist dazu eingerichtet einen derartigen Steuerbefehl zu erzeugen. Der Prozessor 3 ist dazu eingerichtet eine Sollhöhe 11, insbesondere einen Wert einer Sollhöhe 11, von einem Speicher 4 oder einer externen Datenbank 5 zu erhalten. Weiter ist der Prozessor 3 dazu eingerichtet, den Steuerbefehl auf Grundlage der aus dem Speicher 3 erhaltenen Sollhöhe 11 zu erzeugen.

Weiter ist der Prozessor 3 dazu eingerichtet, den Steuerbefehl an den Aktuator 2 zu senden. Der Steuerbefehl ist derart ausgestaltet, dass der Aktuator 2 das SEP 1 beim Ausführen des Steuerbefehls, auf die Sollhöhe 11 bewegt. In Figur 3 ist eine Anordnung gezeigt, in der der Steuerbefehl bereits durchgeführt wurde, sodass das SEP sich bereits auf der Sollhöhe 11 befindet. Der Steuerbefehl kann beispielsweise eine Bewegungsrichtung, also nach oben oder nach unten, und eine Weglänge enthalten. Sowohl die Weglänge als auch die Bewegungsrichtung können auf Grundlage der aktuellen Position des SEP 1 und der Sollhöhe 11 ermittelt werden. Die Weglänge kann beispielsweise aus einem Betrag der Differenz von Sollhöhe 11 und aktueller Position des SEP 1 bestimmt werden und die Bewegungsrichtung aus dem Vorzeichen jener Differenz bestimmt werden.

Die Sollhöhe kann dabei, wie in dem in Figur 3 gezeigten Beispiel, der Abstand der optischen Achse 12 des SEP 1 zu einer Bodenebene 6 sein. Weiter sind auch andere Definitionen der Sollhöhe möglich, beispielsweise der Abstand einer Unterkante des SEP 1 zur Bodenebene 6.

Weiter weist die Vorrichtung in der Ausführungsform der Figur 3 eine Eingabeeinheit 9 auf. Mit der Eingabeeinheit 9 können Fahrzeug- und/oder Scheinwerferdaten durch einen Nutzer eingegeben werden. Der Prozessor 3 ist dazu eingerichtet, die eingegebenen Fahrzeug- und/oder Scheinwerferdaten zu erfassen oder zu erhalten. Weiter kann der Prozessor 3 dazu eingerichtet sein, den ersten Steuerbefehl auf Grundlage der eingegebene Fahrzeug- und/oder Scheinwerferdaten zu erzeugen. Dabei kann der Prozessor 3 beispielsweise die Sollhöhe des SEP 1 auf Grundlage der Fahrzeug- und/oder Scheinwerferdaten aus dem Speicher 4 oder einer externen Datenbank 5 auszulesen bzw. zu erhalten.

Im Allgemeinen kann der Aktuator 2 am Gehäuse des SEP 1 angeordnet sein und/oder der Prozessor 3, der Speicher 4, die Datenquelle 5 und/oder die Eingabeeinheit 9 jeweils an oder im Gehäuse des SEP 1 angeordnet sein. Weiter können das SEP 1, der Aktuator 2 und der Prozessor 3 ein System zum Prüfen einer Scheinwerfereinstellung bilden. Ein solches System kann beispielsweise den Speicher 4, die Datenquelle 5 und/oder die Eingabeeinheit 9 aufweisen.

Figur 4 zeigt eine schematische Darstellung einer weiteren Ausführungsform einer Vorrichtung zum Höhenverstellen eines SEP 1. In dieser Ausführungsform weist die Vorrichtung ein Positionsbestimmungsmittel 26 auf, das es ermöglicht eine Höhe des SEP 1, insbesondere eine Unterseite des SEP1, über einer Bodenebene 6 zu bestimmen. Das Positionsbestimmungsmittel 26 kann dabei zum Beispiel an der Unterseite des SEP 1 angeordnet sein. Der Prozessor 3 kann dabei dazu eingerichtet sein, den Steuerbefehl auf Grundlage der vom Positionsbestimmungsmittel 26 ermittelten Höhe des SEP 1 und der aus dem Speicher 4 oder der externen Datenbank 5 erhaltenen Sollhöhe zu erzeugen. Als Positionsbestimmungsmittel 26 kann beispielsweise ein Ultraschall- oder Laser-Entfernungsmesser verwendet werden. In manchen Ausführungsformen kann der Steuerbefehl auch derart formuliert sein, dass der Aktuator das SEP 1 zumindest so lange bewegt, bis das Positionsbestimmungsmittel bestimmt, dass das SEP 1 einen vorbestimmten Abstand zur Bodenebene 6 aufweist, wobei der vorbestimmte Abstand auf Grundlage der Sollhöhe bestimmt wird.

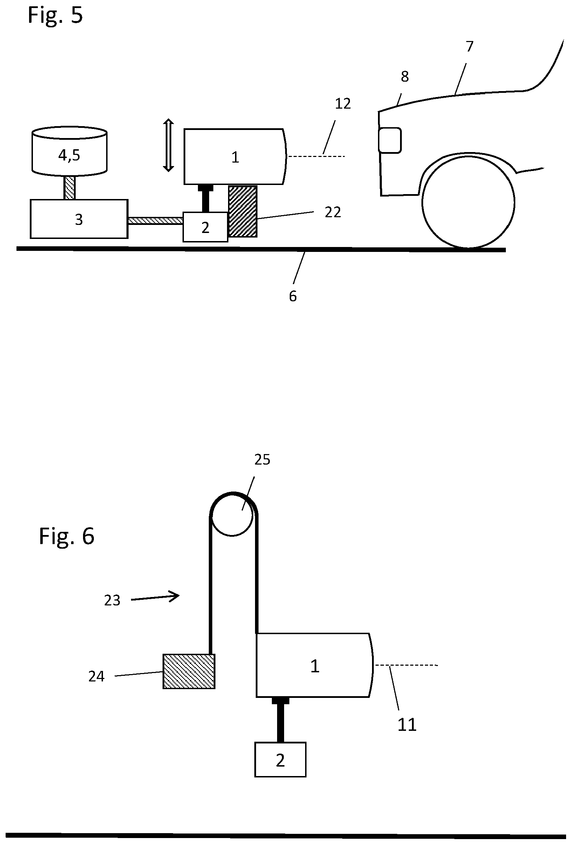

Figur 5 zeigt eine weitere Ausführungsform der Vorrichtung zum Höhenverstellen eines SEP 1. Im Unterschied zur Ausführungsform der Figur 4 weist die Vorrichtung dabei einen Anschlag 22 auf, der den Verschiebeweg des SEP 1 in vertikaler Richtung begrenzt. Der Anschlag 22 kann dabei eine mechanische Begrenzung bilden, wie in Figur 5 dargestellt. Es sind auch Ausführungsformen möglich, in denen der Anschlag 22 elektronisch gebildet bzw. elektronisch ausgelöst wird, beispielsweise in Form einer Lichtschranke, sodass die Bewegung des Aktuators automatisch gestoppt wird, sobald die Lichtschranke beispielsweise überschritten wird. Der Anschlag 22 kann dabei eine Referenzposition des Aktuators 2 und/oder eine Referenzposition des SEP 1 definieren. Eine Referenzposition des Aktuators 2 kann beispielsweise die Stellung des Aktuators 2 zum Zeitpunkt des Anschlagens oder die Stellung des Aktuators beim Beenden weiterer Aktuatorbewegung nach dem Anschlagen sein. Die Referenzposition des SEP 1 kann beispielsweise der Abstand des SEP 1 zu einer Bodenebene 6 sein, wenn das SEP 1 an den Anschlag 22 anschlägt. Der Anschlag 22 kann beispielsweise auch für eine Kalibration der Vorrichtung verwendet werden.

Figur 6 zeigt einen weiteren Aspekt einer Vorrichtung zum Höhenverstellen eines SEP 1. Dabei kann die Vorrichtung eine Entlastungsvorrichtung 23 aufweisen, die den Aktuator 2 von der Gewichtskraft des SEP 1 entlastet. In der dargestellten Ausführungsform weist die Entlastungsvorrichtung 23 ein Gegengewicht 24 und einen Übertragungsmechanismus 25 auf. Der Übertragungsmechanismus 25 kann beispielsweise in Form einer Umlenkrolle realisiert sein. Das Gegengewicht 24 kann, beispielsweise so schwer sein, wie das SEP 1, das bedeutet, dass die Masse des Gegengewichts um weniger als 50 %, beispielsweise weniger als 20 % oder insbesondere weniger als 10 % von der Masse des SEP 1 abweicht. Die Entlastungsvorrichtung 25 entlastet den Aktuator 2 in der vorliegenden Ausführungsform dann von mehr als 50 %, oder beispielsweise mehr als 80 % oder insbesondere mehr als 90 % der Gewichtskraft des SEP 1. Es sind auch andere Entlastungsmechanismen möglich, die beispielsweise auf einer hydraulischen Unterstützung des Aktuators basieren. Alternativ oder ergänzend kann ein Antrieb vorgesehen sein, der die Umlenkrolle dreht. Dieser Antrieb kann in manchen Ausführungsformen auch die Funktion des Aktuators 2 übernehmen oder zumindest unterstützen und dazu eingerichtet sein, Steuerbefehle des Prozessor 3 zu empfangen und so das SEP 1 in vertikaler Richtung derart zu bewegen oder die Bewegung derart zu unterstützen, dass sich das SEP 1 auf der Sollhöhe befindet.

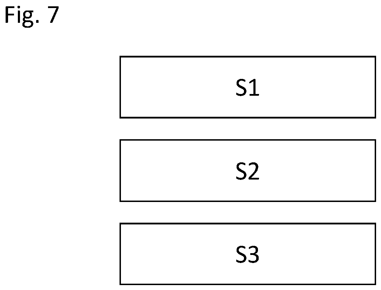

Figur 7 zeigt Verfahrensschritte eines Verfahrens zum Höhenverstellen eines SEP 1. Das Verfahren ist insbesondere dafür konzipiert durch die in den Figuren 3-6 gezeigten Vorrichtungen ausgeführt zu werden. Dabei umfasst Schritt S1 das Erhalten einer Sollhöhe von einer Speichereinheit oder einer externen Datenquelle. Die Sollhöhe kann beispielsweise durch einen Prozessor 3 von der Speichereinheit 4 erhalten werden. Das kann beispielsweise bedeuten, dass der Prozessor 3 dazu ausgebildet ist, eine Sollhöhe von einer Speichereinheit 4 auszulesen oder zu empfangen. Schritt S2 umfasst das Erzeugen eines ersten Steuerbefehls auf Grundlage der erhaltenen Sollhöhe. Der erste Steuerbefehl kann beispielsweise durch einen Prozessor 3 erzeugt werden. Das kann bedeuten, dass der Prozessor 3 beispielsweise dazu ausgebildet ist, einen Steuerbefehl auf Grundlage der erhaltenen Sollhöhe zu erzeugen. Der erste Steuerbefehl kann dabei derart ausgestaltet sein, dass er einen Aktuator 2 dazu veranlasst, ein SEP 1 in vertikaler Richtung derart zu bewegen, dass es sich in der Sollhöhe befindet. Der Prozessor 3 kann beispielsweise derart mit dem Aktuator 2 verbunden sein, dass der Steuerbefehl vom Prozessor 3 an den Aktuator 2 übertragen werden kann. Der Aktuator 2 kann also beispielsweise dazu eingerichtet sein, den Steuerbefehl zu empfangen. Der Prozessor 3 kann beispielsweise dazu eingerichtet sein, den Steuerbefehl zu senden oder ein Senden des Steuerbefehls durch einen Sender zu veranlassen. Weitere Verfahrensschritte können also beispielsweise auch das Senden des Steuerbefehls und das Empfangen des Steuerbefehls sein. Schritt S3 umfasst schließlich das Bewegen des SEP 1 Grundlage des Steuerbefehls. Der Aktuator 2 ist also dazu eingerichtet den Steuerbefehl auszuführen.

Ergänzend können auch Verfahrensschritte vorgesehen sein, die das Erhalten von Fahrzeug- und/oder Scheinwerferdaten und das anschließende Erhalten der Sollhöhe auf Grundlage des erhaltenen Fahrzeug- und/oder Scheinwerfertyps von dem Speicher 4 oder der externen Datenquelle umfassen.

Weiter kann der erste Steuerbefehl in einigen Ausführungsformen des Verfahrens auf Grundlage der Sollhöhe und einer Referenzposition erzeugt werden.

Alternativ oder ergänzend wird in manchen Ausführungsformen ein zweiter Steuerbefehl erzeugt, um das SEP 1 in vertikaler Richtung derart zu bewegen, dass das SEP 1 und/oder der Aktuator 2 in der Referenzposition angeordnet ist. Anschließend kann das SEP 1 durch Ausführen des zweiten Steuerbefehls in einem weiteren Verfahrensschritt durch den Aktuator 2 bewegt werden, wobei die Bewegung des SEP 1 in einem weiteren Verfahrensschritt an der Referenzposition gestoppt wird. Das Stoppen kann beispielsweise durch einen mechanischen Anschlag 22 oder einen elektronischen Anschlag erfolgen. Anschließend kann in einem weiteren Verfahrensschritt die aktuelle Position als Referenzposition festgelegt werden.

Der erste Steuerbefehl und/oder der zweite Steuerbefehl können drahtgebunden oder drahtlos an den Aktuator 2 geschickt werden, der daraufhin den Steuerbefehl ausführt.

### Bezugszeichenliste:

- 1: Scheinwerfer-Einstellprüfgerät, SEP
- 2: Aktuator
- 3: Prozessor
- 4: Speicher
- 5: Datenquelle
- 6: Bodenebene
- 7: Fahrzeug
- 8: Fahrzeugscheinwerfer
- 9: Eingabeeinheit
- 11: Höhe des SEP
- 12: optische Achse des SEP
- 14: Verschiebemittel
- 15: Führungsschiene
- 22: Anschlag
- 23: Entlastungsvorrichtung
- 24: Gegengewicht
- 25: Übertragungsmechanismus
- 26: Positionsbestimmungsmittel

## Patentansprüche

1. Vorrichtung zum Höhenverstellen eines Scheinwerfer-Einstell-Prüfgeräts, SEP (1), aufweisend
• einen Aktuator (2) zum Bewegen des SEP (1) in vertikaler Richtung;
• einen Prozessor (3), der mit dem Aktuator (2) wirksam verbunden ist und dazu eingerichtet ist, eine Sollhöhe des SEP (1) von einem Speicher (4) oder einer externen Datenquelle (5) zu erhalten und einen ersten Steuerbefehl zum Steuern des Aktuators (2) auf Grundlage der erhaltenen Sollhöhe zu erzeugen.

2. Vorrichtung nach dem vorangehenden Anspruch, wobei der Prozessor (3) dazu eingerichtet ist, Fahrzeug- und/oder Scheinwerferdaten zu erhalten, und auf Grundlage der Fahrzeug- und/oder Scheinwerferdaten die Sollhöhe des SEP (1) zu erhalten oder zu bestimmen.

3. Vorrichtung nach einem der vorangehenden Ansprüche, weiter aufweisend eine Eingabeeinheit (9) zum Eingeben von Fahrzeug- und Scheinwerferdaten, wobei der Prozessor (3) dazu eingerichtet ist, den ersten Steuerbefehl auf Grundlage der eingegebenen Fahrzeug- und Scheinwerferdaten zu erzeugen.

4. Vorrichtung nach einem der vorangehenden Ansprüche, weiter aufweisend einen Anschlag (22), der einen Verschiebeweg des SEP (1) in vertikaler Richtung begrenzt und eine Referenzposition des Aktuators (2) und/oder eine Referenzposition des SEP (1) definiert.

5. Vorrichtung nach einem der vorangehenden Ansprüche, wobei der Prozessor (3) weiter dazu eingerichtet ist, den ersten Steuerbefehl auf Grundlage der Referenzposition des Aktuators (2) und/oder der Referenzposition des SEP (1) zu erzeugen.

6. Vorrichtung nach einem der vorangehenden Ansprüche, weiter aufweisend eine vertikale Führung, die dazu eingerichtet ist, das SEP (1) in vertikaler Richtung zu führen.

7. Vorrichtung nach einem der vorangehenden Ansprüche, weiter aufweisend eine Entlastungsvorrichtung (23), die ausgebildet ist, den Aktuator (2) von einem Teil der Gewichtskraft des SEP (1) zu entlasten, wobei die Entlastungsvorrichtung (23) vorzugsweise ein Gegengewicht (24) und einen Übertragungsmechanismus (25) aufweist.

8. Vorrichtung nach einem der vorangehenden Ansprüche, wobei die Vorrichtung weiter ein Positionsbestimmungsmittel (26) zum Bestimmen einer vertikalen Position des SEP (1) und/oder einer Position des Aktuators (2) aufweist.

9. Vorrichtung nach dem vorangehenden Anspruch, wobei der Prozessor (3) dazu eingerichtet ist, den ersten Steuerbefehl auf Grundlage der vertikalen Position des SEP (1) und/oder der Position des Aktuators (2) und der Sollhöhe des SEP (1) zu erzeugen.

10. Verfahren zur automatischen Höheneinstellung eines Scheinwerfer-Einstell-Prüfgeräts (1), aufweisend die Schritte:
• Erhalten einer Sollhöhe von einer Speichereinheit (4) oder einer externen Datenquelle (5);
• Erzeugen eines ersten Steuerbefehls auf Grundlage der erhaltenen Sollhöhe zum Bewegen des SEP (1) in vertikaler Richtung mit einem Aktuator (2).

11. Verfahren nach dem vorangehenden Anspruch, weiter aufweisend die Schritte:
• Erhalten von Fahrzeug- und/oder Scheinwerferdaten;
• Erhalten einer Sollhöhe auf Grundlage des erhaltenen Fahrzeug- und/oder Scheinwerfertyps von der Speichereinheit (4) oder der externen Datenquelle (5).

12. Verfahren nach einem der vorangehenden Ansprüche 10-11, wobei der erste Steuerbefehl auf Grundlage der Sollhöhe und einer Referenzposition erzeugt wird.

13. Verfahren nach einem der vorangehenden Ansprüche 10-12, weiter aufweisend die Schritte:
• Erzeugen eines zweiten Steuerbefehls, um das SEP (1) in vertikaler Richtung derart zu bewegen, dass das SEP (1) und/oder der Aktuator (2) in der Referenzposition angeordnet ist;
• Bewegen des SEP (1) durch Ausführen des zweiten Steuerbefehls;
• Stoppen der Bewegung des SEP (1) an der Referenzposition;
• Festlegen der aktuellen Position als Referenzposition.

14. Verfahren nach dem vorangehenden Anspruch, wobei das Stoppen der Bewegung durch einen Anschlag (22), der den Verschiebeweg des SEP (1) begrenzt, erfolgt.

15. Computerprogramm, wobei das Computerprogramm Anweisungen aufweist, die einen Steuerungscomputer dazu veranlassen, das Verfahren nach einem der Ansprüche 10-14 auszuführen.
